# EUROPEAN PATENT SPECIFICATION

(11) **EP 3 301 771 B1**
(45) Date of publication and mention of the grant of the patent: **10.11.2021**
(21) Application number: 16191635.8
(22) Date of filing: 30.09.2016
(51) Int. Cl.: H02H 3/02, H02H 7/22, H02H 3/05

(54) **FAULT CURRENT HANDLING IN AN ELECTRICAL PLANT**
FEHLERSTROMHANDHABUNG IN EINER ELEKTRISCHEN ANLAGE
MANIPULATION DE COURANT DE DÉFAUT DANS UNE INSTALLATION ÉLECTRIQUE

(43) Date of publication of application: 04.04.2018
(73) Proprietor: ABB Schweiz AG, 5400 Baden (CH)
(72) Inventor: BACKMAN, Magnus, 722 46 Västerås (SE); LILJESTRAND, Lars, 722 42 Västerås (SE); JONES, Peter, Cheshire, CW6 9NU (GB); HINTZEN, Tobias, 41352 Korschenbroich (DE)
(74) Representative: Kransell & Wennborg KB

(56) References cited:
- US-A- 3 959 753
- US-A- 5 886 861
- None

## Description

### FIELD OF INVENTION

The present invention relates to a protection of switch gears with installed fault current limiters against failures. The invention is more particularly directed towards a switchgear arrangement, an electrical plant as well as a method and computer program product for handling a faulty current limiting device.

### BACKGROUND

In electrical plants, such as substations, in power distribution systems, for instance for operation in the medium voltage range, it may be of interest to use a current limiting device in a switchgear of the substation in order to facilitate fault handling.

Such current limiting devices are for instance known from US 7235751, while an example of a substation can be found in US 7079367. US 7079367 also discloses an ultrafast earthing switch used in order to prevent short-circuiting currents from appearing at a fault location.

The fault handling operation using the above-mentioned current limiting device is then the following. Upon the detection of a fault in relation to the switchgear, such as in a feeder or a busbar of the switchgear, the current limiting device is activated in order to reduce the fault current from at least one of a number of fault current sources. This current limiting will then have as an effect that the current level at the fault is low enough for allowing a circuit breaker at the fault to be opened.

However, also the current limiting device may become faulty and it may therefore be necessary to handle also this case, especially when it is to be used for current limitation in systems where the prospective fault currents exceed the short circuit current ratings for the switch gears and the circuit breakers.

Aspects of the invention are directed towards handling such a faulty current limiting device when handling a fault in the electrical plant.

The present invention is directed towards such improved fault current handling.

### SUMMARY OF THE INVENTION

The present invention is directed towards the problem of obtaining fault clearance in a switchgear when a current limiting device is faulty.

This object is according to a first aspect achieved through a switchgear arrangement according to claim 1.

This object is according to a second aspect achieved through an electric plant according to claim 7.

The object is according to a third aspect achieved through a method according to claim 9.

The object is according to a fourth aspect of the present invention achieved through a computer program product according to claim 15.

The earthing switch may have closing time that is faster than 5 ms. The closing may be performed within 5 ms of the determination of non-satisfactory operation. The closing may also be completed within 3 ms of receiving the order.

The present invention has a number of advantages. It provides enhanced safety of the switchgear in case the current limiting device is faulty. This enhanced safety is furthermore reliable and fast. The invention is furthermore easy to implement and may be implemented with an earthing switch and some additional software.

### BRIEF DESCRIPTION OF THE DRAWINGS

The present invention will in the following be described with reference being made to the accompanying drawings, where
fig. 1 schematically shows two interconnected switchgears of an electrical plant with a current limiting device, earthing switches, a number of circuit breakers and a control unit controlling the current limiting device, the earthing switches and some of the circuit breakers,
fig. 2 shows a flow chart of a number of steps in a method of handling a faulty current limiting device in the case of a fault in an outgoing feeder, fig. 3 schematically shows the switchgears of fig. 1 when there are fault currents caused by a fault in the outgoing feeder of one switchgear,
fig. 4 schematically shows the switchgears of fig. 3 after the closing of a first of the earthing switches,
fig. 5 schematically shows switchgears with a second earthing switch when the same fault occurs as in fig. 3 and 4, and
fig. 6 schematically shows a computer program product in the form of a data carrier comprising computer program code for implementing the control unit.

### DETAILED DESCRIPTION OF THE INVENTION

In the following, a detailed description of preferred embodiments of the invention will be given.

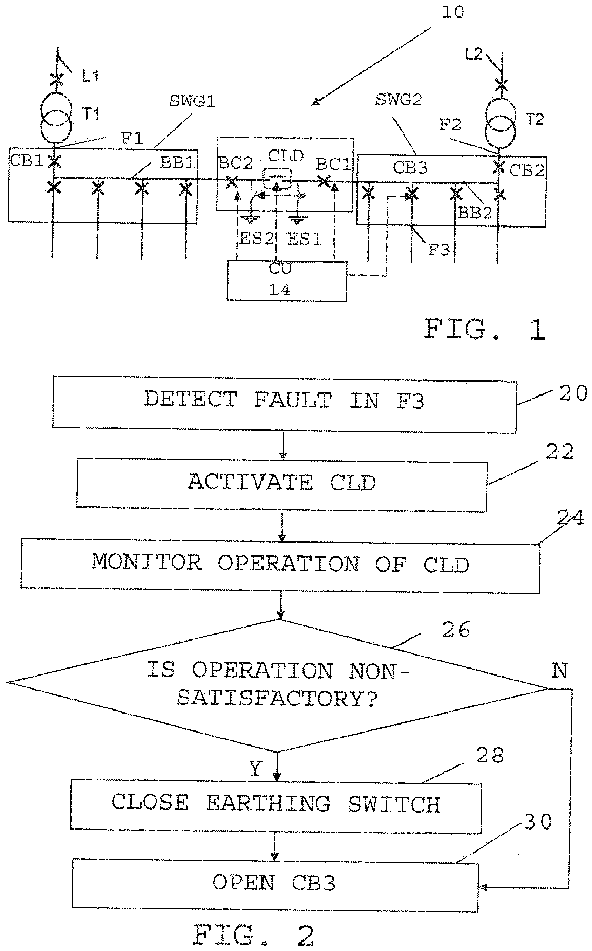

Fig. 1 schematically shows two switchgears SWGi and SWG2 that are provided in an electrical plant 10, such as in a substation. The substation 10 may with advantage be a substation of a power distribution system operating in the medium voltage range of 12 - 36 kV. The substation 10 may thus be a substation for the distribution of electric power, for instance in an industry.

As can be seen in fig. 1, each switchgear SWGi and SWG2 is connected to a number of feeders, and in the figure there is shown two power lines Li and L2, two input feeders L1 and L2 and eight output feeders. A first power line Li is connected to a first busbar BB1 of a first switchgear SWGi via a first feeder F1 and a second power line L2 is connected to a second busbar BB2 of a second switchgear SWG2 via a second feeder F2. Furthermore, each busbar BB1 and BB2 is connected to four output feeders, where a third feeder F3 is one such output feeder connected to the second busbar BB2. The first feeder F1 is more particularly connected to the first power line Li via a first transformer T1 and the second feeder F2 is connected to the second power line L2 via a second transformer T2. In each switchgear there is furthermore a circuit breaker connected to each feeder and configured to be opened in case of a fault in the feeder in question. In the example given here there is a first circuit breaker CB1 connected to the first input feeder F1, a second circuit breaker CB2 connected to the second input feeder and a third circuit breaker connected to the third output feeder F3. A busbar is here a link interconnecting at least two second feeders. In the example in fig. 1 there are two switchgears SWGi and SWG2, the buses of which are interconnected using a bus coupler BC. It can also be seen that the bus coupler BC comprises a first bus coupler circuit breaker BC1 connected to the second busbar BB2 and a second bus coupler circuit breaker BC2 connected to the first busbar BB2. The busbars and these feeders are each a power transmission element. It can also be seen that each such power transmission element is provided or equipped with at least one corresponding circuit breaker CB1, CB2 and CB3, BC1 and BC2. The bus coupler circuit breakers are thus associated with the busbars to which they are connected. Thereby there is a circuit breaker for every power transmission element of or associated with a switchgear.

There is furthermore a current limiting device CLD 12 in the bus coupler BC. It is more particularly connected between the two busbars BB1 and BB2. It can furthermore be seen that it is connected in series with these busbars BB1 and BB2. Thereby the current limiting device 12 has a first or left side connected to the first busbar BB1 and a second or right side connected the second busbar BB2. Furthermore, through this placing the first input feeder F1 and half of the output feeders are connected to the first busbar BB1 and the second input feeder F2 and the other half of the output feeders connected to the second busbar BB2. Moreover, in this example the third feeder F3 is one of the output feeders connect to the second busbar BB2. It can thereby be seen that the current limiting device 12 is connected between the first busbar BB1 of connected to the first feeder F1 and the second busbar BB2 connected to the second feeder F2.

The current limiting device 12 is more particularly series-connected with the busbars and thus has the first end connected to the first feeder F1 busbar and the second end connected to the second feeder F2 busbar. There is also a first earthing switch ES1 connected between a busbar and ground at one side of the current limiting device 12. The first earthing switch ES1 is thereby also connected between one side of the current limiting device and ground. In this embodiment it is connected to the second side of the current limiting device 12 and furthermore connected between the current limiting device 12 and the second busbar BB2 connected to the third feeder F3. The first earthing switch ES1 is in fact connected between the current limiting device 12 and all the feeders of the second busbar BB2. Thereby the third feeder F3 is connected to the second busbar BB2 between the current limiting device 12 and the second feeder F2. In a similar manner there is a second earthing switch ES2 connected between the first busbar BB1 and ground at the first side of the current limiting device 12. The second earthing switch ES2 is in a similar manner connected between the current limiting device 12 and all the feeders of the first busbar BB1. The earthing switches ES1 and ES2 may with advantage be ultra fast earthing switches set to close within 3 ms after being activated. They may also be included in the bus coupler BC.

As mentioned earlier there is a first and second bus coupler circuit breaker BC1 and BC2, where the first bus coupler circuit breaker BC1 is connected to the second busbar BB2, i.e. between the second side of the current limiting device 12 and the second feeder F2. The second bus coupler circuit breaker BC2 is connected to the first busbar BB1, i.e. between the first side of the current limiting device 12 and the first feeder F1. In this example a bus coupler circuit breaker BC1 and BC2 connected to a certain busbar is furthermore connected between the current limiting device 12 and all feeders connected to it. However, the corresponding earthing switch ES1 and ES2 is connected between the bus coupler circuit breaker BC1 and BC2 in question and the current limiting device 12. As the two busbars together form a link between the first and second feeders F1 and F2, the bus coupler circuit breakers may also be considered to be link circuit breakers.

There is also a control unit CU 14 shown to be controlling the current limiting device 12, the third circuit breaker CB3 the first and second bus coupler circuit breakers BC1 and BC2 and the first and second earthing switches ES1 and ES2.

It should also be realized that the control unit 14 may control the other circuit breakers of the two switchgears SWGi and SWG2. The reason that only the third circuit breaker CB3 and the bus coupler circuit breakers BC1 and BC2 are shown as being controlled is that they will be used in relation to an exemplifying fault that will occur on the third feeder F3.

An earthing switch may be based on mechanical contact elements being placed in a chamber, for instance in a gas filled or vacuum filled chamber. These mechanical contact elements may then be controllable to get galvanically connected, for instance using explosives, in order to obtain a permanent earthing or grounding connection. The earthing switch may be able to close the mechanical contact elements within 3 ms after being activated, where the decision to activate the earthing switch may take another 2ms, leading to a total time of 5 ms form the detection of a fault and the activation of the earthing switch.

When two switchgears are interconnected, then the currents may become higher than the switchgear current rating, which is addressed through the addition of the current limiting device 12, which is especially important when there are faults.

The current limiting device 12 has the role of limiting the current in a fault occurring either in a switch gear or at any of the feeders connected to a switch gear. The control unit 12 thus activates the current limiting device 12 if there is a fault on an electrical power transmission element of the at least one switchgear, for instance in an electrically conducting element of or associated with a switchgear such as feeder or the busbar.

There are a number of different ways in which a current limiting device maybe realized, where one is disclosed in US 7235751. Alternatively, a current limiting device may comprise a mechanical switch having mechanical contact elements and power electronic switches in parallel with the mechanical switch. The current limiting device 12 also comprises a voltage limiting element, such as a surge arrester or varistor, in parallel with the above-mentioned elements. The mechanical switch is carrying the current during normal conditions in the system. The mechanical switch is opened and commutating the rising short circuit current into the power electronic switches. The power electronic switches are being turned off when the mechanical switch has opened enough to withstand the voltage caused by turn off of the power electronic switches. Turning off the power electronic switches would cause an over voltage due to the trapped magnetic energy in the short circuit inductance of the system. This overvoltage is limited by the surge arrester and the current is diverted into the surge arrester at the instant the power electronic switches are turned off. The operation of such a current limiting device is similar to the operation of hybrid direct current circuit breaker, thereby limiting the current through the current limiting device. In this way the current through the current limiting device 12 is limited and thereby it is possible for the fault current at the fault to be kept below a level, at which it is possible to open the circuit breaker at the electrically conducting element experiencing the fault.

The current limiting device of the type described above is a power electronics based current limiting device. It should be realized that it is possible also with other types, such as a superconducting or Is-limiter type of current limiting devices.

In operation it is possible that the current limiting device 12 is not working properly. It may thus work non-satisfactorily in that it does not limit the current or does not limit the current in a sufficient degree. This may be the case if for instance it is impossible to separate the mechanical contact elements or in case the mechanical contact cannot be opened wide enough resulting in an arc between the moving mechanical contact elements. If this happens the current may not be possible to limit, which may lead to problems in opening the circuit breaker at the fault location if the short circuit current exceeds the ratings of the circuit breaker.

Aspects of the invention are provided for addressing this problem.

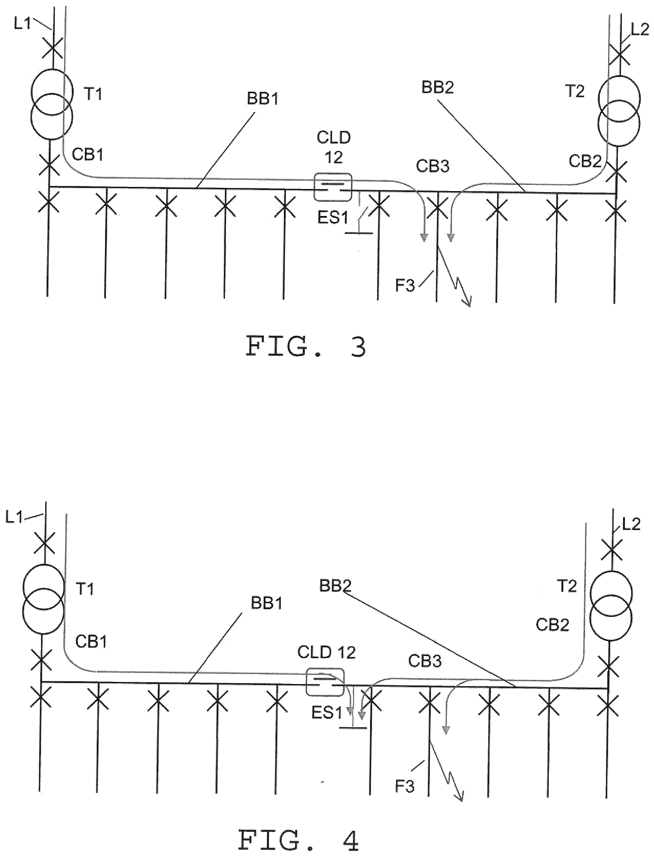

Now the operation of the control unit 14 in order to handle a fault in the two interconnected switchgears SWGi and SWG2 when also the current limiting device 12 is being faulty will be given. The operation will initially be described only using the first earthing switch ES1 and not the second earthing switch ES2. The operation will also be described with reference being made to fig. 2, which shows a number of method steps in a method of operating the control unit 14 for handling faults when also the current limiting device 12 is faulty, as well as to fig. 3 and 4, which show the interconnected switchgears of fig. 1 when there are fault currents caused by a fault in an outgoing feeder, here the third feeder F3, and after the closing of the earthing switch ES1.

It should be realized that a fault may occur at any of the electrically conducting elements such as any of the feeders or the busbar. However, in the following operation will be described in relation to one element, namely the third feeder F3. The operation may therefore start through the control unit 14 detecting a fault at one of the electrically conducting power transmission elements of the switchgears, here the exemplifying third feeder F3, step 20. It is here possible that a fault is detected as an overcurrent running through the feeder F3, which may be measured through a current transformer in the third circuit breaker CB3. It is also possible to detect a fault through detecting the voltage at the third feeder F3, which may be done through using a voltage transformer that may likewise be placed in the third circuit breaker CB3. The current and/or voltage measurements may continually be supplied to the control unit 14, which may detect a fault through for instance the voltage falling below a voltage threshold or the current exceeding fault current threshold. If a fault is detected, then the control unit 14 activates the current limiting device 12, step 22, which would normally lead to the current running through the current limiting device 12 being limited. The detected fault may be a ground fault. However, it is also possible to detect phase-to-phase faults or three-phase faults with regard to ground.

The situation where there is a fault in the third feeder F3 while the current limitation device 12 is activated is shown in fig. 3. Here the first power line Li acts a first fault current source feeding a fault current to the fault at the third feeder F3 via the first transformer T1 and the current limiting device 12, while the second power line L2 acts as a second fault current source feeding a second fault current to the fault in the third feeder F3 via the second transformer T2. Thereby a total fault current made up of, or being a sum of, the first and second fault currents runs through the third circuit breaker CB3 to the fault in the third feeder F₃. It can thus be seen that the fault causes a first fault current to run via one of the busbars through the current limiting device 12 to the faulty power transmission element, feeder F3, and a second fault current to run via another of the busbars to the faulty power transmission element F3 so that a combined fault current runs through the circuit breaker CB3 of the faulty power transmission element F3.

The purpose of the current limiting device 12 is to ensure that the short circuit current rating of CB3 is not exceeded. This is performed by reducing the contribution of the short circuit current from "T1" ensuring that the peak short circuit current through the third feeder circuit breaker CB3 does not exceed the peak current from "T2" alone

In order to ensure that a current limitation is actually being made, the control unit 14 furthermore monitors the operation of the current limiting device 12, step 24. This monitoring, which thus follows the detection of a fault on one of the power transmission elements and ensuing activation of the current limiting device, may be done through monitoring the level of the current through the current limiting device 12. The current may be monitored through measuring the current running through the current limiting device 12. This may as an example be done using a current transformer, for instance using a current transformer in the first or second busbar circuit breaker BC1 or BC2 or in the current limiting device 12 itself.

As an example, it is possible that the current is compared with a current limitation or overcurrent threshold, and if this threshold is exceeded then the control unit 14 may deem that the operation of the current limiting device 12, is non-satisfactory. However, if the current level is below the threshold the control unit 14 may deem the operation of the current limiting device 12 to be satisfactory.

If the operation is deemed to be satisfactory, step 26, then current limitation is made according to plan using the current limiting device 12 and thereby the total current running in the faulty electrically conducting element of the switchgear 10 will become low enough so that the circuit breaker of this element, here the third circuit breaker CB3 of the third feeder F3, may be safely opened, step 30.

However, if the operation of the current limiting device 12 is determined to be non-satisfactory so that it fails to open or to interrupt the short circuit current, the fault current through "CB3" could exceed the short circuit current ratings.

Therefore, in case the operation is deemed to be non-satisfactory, step 26, which means that the operation of the current limiting device 12 is faulty, then the earthing switch ES1 is closed, step 28. This may be done at ultra high speed, such as within 3 ms after being ordered and causes the current from the first fault current source that runs through the current limiting device 12 to go to ground via the closed earthing switch ES1. It is here possible that also some of the current from the second fault current source goes to ground through this earthing switch ES1.

What happens when the earthing switch ES1 is closed is shown in more detail in fig. 4. Through the current from the first fault current source Li being diverted to ground via the first earthing switch ES1 and perhaps also through some of the fault current from the second fault current source L2 going this way, it can be seen that the current going to the fault is reduced. In this way it is possible to reduce or lower the fault current through the third circuit breaker CB3 to a level below the switchgear rating at which this circuit breaker CB3 may be safely opened and thereby the fault cleared.

The earthing switch ES1, with advantage being ultra fast, installed at the current limiting device 12 will thereby prevent the short circuit current from "T1" to reach the right part of the bus BB.

The short circuit current from "T2" will in turn be split between the fault and the earthing switch ES1. The earthing switch ES1 should be with advantage be designed for the total short circuit current from both "T1" and "T2", i.e. from both fault current sources.

Thereby, when the first earthing switch ES1 closes and the short circuit current is diverted from the outgoing feeder F3 to the bus coupler, the current at the fault location will then not exceed the switchgear rating. This operation can be sufficiently fast to avoid overstressing the switchgear in case of a failure in the fault current limiter.

Fault can now be cleared by breakers in the bus couplers and at the outgoing feeder. The short circuit current to ground through ES1 will be cleared by opening either BC1 and BC2 if they are installed or CB1 and CB2.

Therefore, after the grounding switch has been closed, the control unit 14 also opens the third circuit breaker CB3 and thereby the fault has been isolated from the switchgear.

As the current limiting device 12 in this case is faulty, it is now also possible that this is isolated for being replaced. Therefore, the control unit 14 may also open the first and optionally also second busbar circuit breaker BC1 and BC2 after the disconnection of the fault through the opening of the third circuit breaker CB3 and after the closing of the earthing switch ES1.

It can in this way be seen that the switchgears SWGi and SWG2 are being protected also if the current limiting device is faulty.

Through the addition of the earthing switch ES1 in the bus coupler BC connected between of the busbars BB1 and BB2 together with the current limiting device 12, back up protection in case the current limiting device 12 fails to operate on command is obtained. The earthing switch ES1 will short circuit the busbar BB2 in case of a fault in the current limiting device 12 and prevent short circuit contribution from one busbar to the other and avoid overstressing the existing switchgear.

Above was described the detection of the current limiting device being faulty through investigating the current level. There are other ways in which a fault may be detected. The detection of a current limiting device fault can for instance also be based on arc detection by light, perhaps in combination with current and current derivative and possibly also based on feedback signal from the current limiting device 12 that it has not reached its fully open position, a signal concerning a fault in gate drive unit or similar.

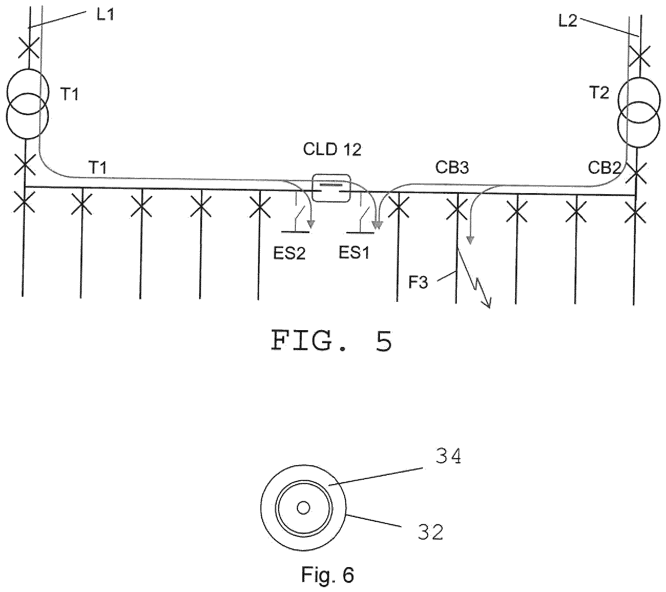

In the example given above only one earthing switch, the first earthing switch ES1 was used. The second earthing switch ES2 may be required in the case an arc is burning in the contact system of the current limiting device 12. The operation of two earthing switches is schematically shown in fig. 5, where the second earthing switch ES2 is placed on the first side of the current limiting device 12, i.e. on the opposite side of current limiting device compared with the first earthing switch ES1 and operation is performed for the same type of fault as in fig. 3 and 4. When monitoring the operation of the current limiting device, the control unit may in this case monitor if there is an arc inside the current limiting device and when determining if the operation of the current limiting device is non-satisfactory is operative to also close the second earthing switch ES2 if there is determined to be an arc. If there is no arc in the faulty current limitation device, then it may be sufficient to only close the first earthing switch ES1. The fault monitoring is in this case not limited to arcs, but also monitoring of too high power levels are possible. Too high power levels may be caused by a partly open mechanical switch or through one of the power electronic switches not getting turned on. It can be seen that the second earthing switch ES2 allows a part of the fault current from the first fault current source Li to go to ground before reaching the current limiting device 12, while another part of it goes to ground via the first earthing switch ES1 after passing the current limiting device 12.

There are a number of possible variations that are possible to make of the invention. Above the fault current limiting device was placed in the bus coupler between two switchgears. However, there are also other possible locations for it, such as in an incoming feeder or as a generator connection. In the case of an incoming feeder it is possible to modify the system in fig. 1 through moving the current limiting device with first and second earthing switch to between the second circuit breaker CB2 and the second busbar BB2. In the case of a generator, then these elements could have the same position between the second busbar BB2 and the second circuit breaker CB2. In this case there may be a generator connected to the second circuit breaker CB2 instead of the second transformer. The second earthing switch may also be omitted. When there is no second earthing switch, then the first earthing switch Esi may be placed on the opposite side of the current limiting device compared to fig. 3 and 4. Furthermore, the operation was above described in relation to the control unit performing a combined handling of the original fault in a power transmission element with the handling of the fault in the current limiting device. It should however be realized that these types of operations may be separated. There may be a separation of the control of faults in power transmission element and the handling of a fault on the current limiting device, for instance so that one control unit performs one of the types of control and another performs the other.

The control unit may be realized in the form of discrete components. However, it may also be implemented in the form of a processor with accompanying program memory comprising computer program code that performs the desired control functionality when being run on the processor. A computer program product carrying this code can be provided as a data carrier such as one or more CD ROM discs or one or more memory sticks carrying the computer program code, which performs the above-described control functionality when being loaded into a control unit of a voltage source converter. One such data carrier in the form of a CD Rom disk 32 carrying computer program code 34 is shown in fig. 6.

From the foregoing discussion it is evident that the present invention can be varied in a multitude of ways. It shall consequently be realized that the present invention is only to be limited by the following claims.

## Claims

1. A switchgear arrangement comprising:
at least two input feeders (F1, F2) and an output feeder (F3),
a first and a second switchgear (SWG1, SWG2),
the first switchgear (SW1) comprises a first link (BB1) connected to a first input feeder (F1),
the second switchgear (SW2) comprises a circuit breaker (CB3) and a second link (BB2), where the second link (BB2) is connected to a second input feeder (F2) and, via the circuit breaker (CB3), to the output feeder (F3),
said links and said switchgears each being a power transmission element, a current limiting device (12) having a first side connected to the first link (BB1) of the first switchgear (SWG1), and a second side connected to the second link (BB2) of the second switchgear (SWG2),
a first earthing switch (ES1) connected between one of the sides of the current limiting device and ground, and
a control unit (14) operative to, upon the detection of a fault on the output feeder (F3) and ensuing activation of the current limiting device (12), said fault causing a first fault current to run via the first input feeder (F1) and the first link (BB1) through the current limiting device (12) to the faulty output feeder (F3) and a second fault current to run via the second input feeder (F2) and the second link (BB2) to the faulty output feeder (F3) so that a combined fault current runs through the circuit breaker (CB3) of the faulty output feeder (F3),
monitor the operation of the current limiting device (12),
determine if the operation of the current limiting device (12) is non-satisfactory, and
close the first earthing switch (ES1) in case the operation of the current limiting device is deemed to be non-satisfactory thereby lowering the current through the circuit breaker (CB3) of the output feeder (F3) to a level where said circuit breaker (CB3) may be opened.

2. The switchgear arrangement according to claim 1, wherein the first side of the current limiting device (12) is connected to the first input feeder (F1) via the first link (BB1) of the first switchgear (SWG1) and the second side of the current limiting device is connected to the second input feeder (F2) via the second link (BB2) of a second switchgear (SWG2).

3. The switchgear arrangement according to claim 1 or 2, further comprising a first bus coupler circuit breaker (BC1) connected in series with the second side of the current limiting device (12) and a second bus coupler circuit breaker (BC2) connected in series with the first side of the current limiting device (12), wherein the control unit (14) is operative to open the first bus coupler circuit breaker (BC1) and optionally also the second bus coupler circuit breaker (BC2) after the opening of the circuit breaker (CB3) of the faulty output feeder (F3).

4. The switchgear arrangement according to any previous claim, wherein the control unit (14) is further operative to detect the fault of the faulty output feeder (F3), activate the current limiting device (12) based on this fault detection and open the circuit breaker (CB3) of the faulty output feeder (F3) after the closing of the first earthing switch (ES1).

5. The switchgear arrangement according to any previous claim, wherein the control unit (14) when monitoring the operation of the current limiting device (12) is operative to monitor the current level of the current through the current limiting device (12) and when determining if the operation of the current limiting device (12) is non-satisfactory is operative to compare the current level with an overcurrent threshold and determine that the operation is non-satisfactory if the overcurrent threshold is exceeded.

6. The switchgear arrangement according to any previous claim, further comprising a second earthing switch (ES2) on the opposite side of the current limiting device compared with the first earthing switch (ES1) wherein the control unit (14) is operative to also close the second earthing switch (ES2) if determining that the operation of the current limiting device is non-satisfactory.

7. An electric plant comprising the switchgear arrangement according to any previous claim.

8. The electric plant according to claim 7, wherein the link is a busbar in said switchgears.

9. A method of handling a faulty current limiting device (12) connected to a first and a second switchgear (SWG1, SWG2), where the first switchgear (SW1) comprises a first link (BB1) connected to a first input feeder (F1), the second switchgear (SW2) comprises a circuit breaker (CB3) and a second link (BB2), where the second link (BB2) is connected to a second input feeder (F2) and, via the circuit breaker (CB3), to an output feeder (F3), said links and feeders each being a power transmission element, the current limiting device having a first side connected to the first link (BB1) of the first switchgear (SWG1), and a second side connected to the second link (BB2) of the second switchgear (SWG2) and a first earthing switch (ES1) connected between one of the sides and ground, the method being performed in a control unit (14) and comprising: upon the detection of a fault on the output feeder (F3) and ensuing activation of the current limiting device (12), said fault causing a first fault current to run via the first input feeder (F1) and the first link (BB1) through the current limiting device (12) to the faulty output feeder (F3) and a second fault current to run via the second input feeder (F2) and the second link (BB₂) to the faulty output feeder (F3) so that a combined fault current runs through the circuit breaker (CB3) of the faulty output feeder (F3),
monitoring (24) the operation of the current limiting device (12), determining if the operation of the current limiting device (12) is non-satisfactory, and
closing (28) the first earthing switch (ES1) in case (26) the operation of the current limiting device is deemed to be non-satisfactory thereby lowering the current through the circuit breaker (CB3) of the faulty output feeder (F3) to a level where said circuit breaker (CB3) may be opened.

10. The method according to claim 9, wherein the first side of the current limiting device (12) is connected to the first input feeder (F1) via the first link (BB1) of the first switchgear (SWG1) and the second side of the current limiting device (12) is connected to the second input feeder (F2), via the second link (BB2) of the second switchgear (SWG2).

11. The method according to claim 10, wherein there is a first bus coupler circuit breaker (BC1) connected in series with the second side of the current limiting device (12) and a second bus coupler circuit breaker (BC2) connected in series with the first side of the current limiting device (12) and further comprising opening the first bus coupler circuit breaker (BC1) and optionally also the second bus coupler circuit breaker (BC2) after the opening of the circuit breaker (CB3) of the faulty output feeder (F3).

12. The method according to any of claims 9 - 11, further comprising detecting (20) the fault of the faulty output feeder (F3), activating (22) the current limiting device (12) based on this fault detection and opening (30) the circuit breaker (CB3) of the faulty output feeder (F3) after the closing of the first earthing switch (ES1).

13. The method according to any of claims 9 - 12, wherein the monitoring of the operation of the current limiting device (12) comprises monitoring the current level of the current through the current limiting device (12) and the determining of if the operation of the current limiting device (12) is non-satisfactory comprises comparing the current level with an overcurrent threshold and the determining that the operation is non-satisfactory is made if the overcurrent threshold is exceeded.

14. The method according to any of claims 9 - 13, wherein a second earthing switch (ES2) is connected between the current limiting device (12) and ground on the opposite side of the current limiting device compared with the first earthing switch (ES1) and further comprising of closing also the second earthing switch (ES2) if the operation of the current limiting device is deemed to be non-satisfactory.

15. A computer program product for handling a faulty current limiting device (12) connected to a first and a second switchgear (SWG1, SWG2), where the first switchgear (SW1) comprises a first link (BB1) connected to a first input feeder (F1), the second switchgear (SW2) comprises a circuit breaker (CB3) and a second link (BB2), where the second link (BB2) is connected to a second input feeder (F2) and, via the circuit breaker (CB3), to an output feeder (F3), said links and feeders each being a power transmission element, the current limiting device having a first side connected to the first link (BB1) of the first switchgear (SWG1) and a second side connected to the second link (BB2) of the second switchgear (SWG2) and a first earthing switch (ES1) is connected between one side of the current limiting device and ground, the computer program product comprising a data carrier (32) with computer program code (34) configured to cause a control unit (14) to
upon the detection of a fault on the output feeder (F3) and ensuing activation of the current limiting device (12), said fault causing a first fault current to run via the first input feeder (F1) and the first link (BB1) through the current limiting device (12) to the faulty output feeder (F3) and a second fault current to run via the second input feeder (F2) and the second link (BB2) to the faulty output feeder (F3) so that a combined fault current runs through the circuit breaker (CB3) of the faulty output feeder (F3),
monitor the operation of the current limiting device (12),
determine if the operation of the current limiting device (12) is non-satisfactory, and
close the first earthing switch (ES1) in case the operation of the current limiting device is deemed to be non-satisfactory thereby lowering the current through the circuit breaker (CB3) of the faulty output feeder to a level where said circuit breaker (CB3) may be opened.

## Patentansprüche

1. Schaltgeräteanordnung, umfassend:
mindestens zwei Eingangsversorgungsleitungen (F₁, F2) und eine Ausgangsversorgungsleitung (F₃),
ein erstes und ein zweites Schaltgerät (SWG₁, SWG₂),
wobei das erste Schaltgerät (SW₁) eine erste Verbindungsleitung (BB₁), die mit einer ersten Eingangsversorgungsleitung (F₁) verbunden ist, umfasst,
wobei das zweite Schaltgerät (SW₂) einen Leistungsschalter (CB₃) und eine zweite Verbindungsleitung (BB2) umfasst, wobei die zweite Verbindungsleitung (BB₂) mit einer zweiten Eingangsversorgungsleitung (F₂) und über den Leistungsschalter (CB₃) mit der Ausgangsversorgungsleitung (F₃) verbunden ist,
wobei die Verbindungsleitungen und die Schaltgeräte jeweils ein Stromübertragungselement darstellen, eine Strombegrenzungseinrichtung (12) eine mit der ersten Verbindungsleitung (BB₁) des ersten Schaltgeräts (SWG₁) verbundene erste Seite und eine mit der zweiten Verbindungsleitung (BB₂) des zweiten Schaltgeräts (SWG₂) verbundene zweite Seite aufweisen,
wobei ein erster Erdungsschalter (ES₁) zwischen eine der Seiten der Strombegrenzungseinrichtung und Masse geschaltet ist, und
eine Steuereinheit (14), operativ, um, bei Detektion eines Fehlers auf der Ausgangsversorgungsleitung (F₃) und nachfolgender Aktivierung der Strombegrenzungseinrichtung (12), wobei der Fehler das Laufen eines ersten Fehlerstroms über die erste Eingangsversorgungsleitung (F₁) und die erste Verbindungsleitung (BB₁) durch die Strombegrenzungseinrichtung (12) zu der fehlerhaften Ausgangsversorgungsleitung (F₃) und das Laufen eines zweiten Fehlerstroms über die zweite Eingangsversorgungsleitung (F₂) und die zweite Verbindungsleitung (BB₂) zu der fehlerhaften Ausgangsversorgungsleitung (F₃) bewirkt, so dass ein kombinierter Fehlerstrom durch den Leistungsschalter (CB₃) der fehlerhaften Ausgangsversorgungsleitung (F₃) läuft,
die Operation der Strombegrenzungseinrichtung (12) zu überwachen,
zu bestimmen, ob die Operation der Strombegrenzungseinrichtung (12) unbefriedigend ist, und
den ersten Erdungsschalter (ES₁) in dem Fall zu schließen, dass die Operation der Strombegrenzungseinrichtung als unbefriedigend angesehen wird, um dadurch den Strom durch den Leistungsschalter (CB₃) der Ausgangsversorgungsleitung (F₃) zu einem Pegel zu senken, wo der Leistungsschalter (CB₃) geöffnet werden kann.

2. Schaltgeräteanordnung nach Anspruch 1, wobei die erste Seite der Strombegrenzungseinrichtung (12) mit der ersten Eingangsversorgungsleitung (F₁) über die erste Verbindungsleitung (BB₁) des ersten Schaltgeräts (SWG₁) verbunden ist und die zweite Seite der Strombegrenzungseinrichtung mit der zweiten Eingangsversorgungsleitung (F₂) über die zweite Verbindungsleitung (BB₂) eines zweiten Schaltgeräts (SWG₂) verbunden ist.

3. Schaltgeräteanordnung nach Anspruch 1 oder 2, weiter umfassend einen ersten Buskoppler-Leistungsschalter (BC₁) in Reihe mit der zweiten Seite der Strombegrenzungseinrichtung (12) geschaltet und einen zweiten Buskoppler-Leistungsschalter (BC₂) in Reihe mit der ersten Seite der Strombegrenzungseinrichtung (12) geschaltet, wobei die Steuereinheit (14) operativ ist zum Öffnen des ersten Buskoppler-Leistungsschalters (BC₁) und optional auch des zweiten Buskoppler-Leistungsschalters (BC₂) nach dem Öffnen des Leistungsschalters (CB₃) der fehlerhaften Ausgangsversorgungsleitung (F₃).

4. Schaltgeräteanordnung nach einem vorhergehenden Anspruch, wobei die Steuereinheit (14) weiter operativ ist zum Detektieren des Fehlers der fehlerhaften Ausgangsversorgungsleitung (F₃), Aktivieren der Strombegrenzungseinrichtung (12) auf Basis dieser Fehlerdetektion und Öffnen des Leistungsschalters (CB₃) der fehlerhaften Ausgangsversorgungsleitung (F₃) nach dem Schließen des ersten Erdungsschalters (ES₁).

5. Schaltgeräteanordnung nach einem vorhergehenden Anspruch, wobei die Steuereinheit (14) beim Überwachen der Operation der Strombegrenzungseinrichtung (12) operativ ist zum Überwachen des Strompegels des Stroms durch die Strombegrenzungseinrichtung (12) und beim Bestimmen, ob die Operation der Strombegrenzungseinrichtung (12) unbefriedigend ist, operativ ist zum Vergleichen des Strompegels mit einem Überstromschwellwert und Bestimmen, dass die Operation unbefriedigend ist, falls der Überstromschwellwert überschritten wird.

6. Schaltgeräteanordnung nach einem vorhergehenden Anspruch, weiter umfassend einen zweiten Erdungsschalter (ES₂) auf der gegenüberliegenden Seite der Strombegrenzungseinrichtung verglichen mit dem ersten Erdungsschalter (ES₁), wobei die Steuereinheit (14) operativ ist zum ebenfalls Schließen des zweiten Erdungsschalters (ES₂), falls bestimmt wird, dass die Operation der Strombegrenzungseinrichtung unbefriedigend ist.

7. Elektrische Anlage umfassend die Schaltgeräteanordnung nach einem vorhergehenden Anspruch.

8. Elektrische Anlage nach Anspruch 7, wobei die Verbindungsleitung eine Sammelschiene in den Schaltgeräten ist.

9. Verfahren zum Handhaben einer fehlerhaften Strombegrenzungseinrichtung (12), die mit einem ersten und einem zweiten Schaltgerät (SWG₁, SWG₂) verbunden ist, wobei das erste Schaltgerät (SW₁) eine mit einer ersten Eingangsversorgungsleitung (F₁) verbundene erste Verbindungsleitung (BB₁) umfasst, das zweite Schaltgerät (SW₂) einen Leistungsschalter (CB₃) und eine zweite Verbindungsleitung (BB₂) umfasst, wobei die zweite Verbindungsleitung (BB₂) mit einer zweiten Eingangsversorgungsleitung (F₂) und über den Leistungsschalter (CB₃) mit einer Ausgangsversorgungsleitung (F₃) verbunden ist, wobei die Verbindungsleitungen und Versorgungsleitungen jeweils ein Stromübertragungselement darstellen, die Strombegrenzungseinrichtung eine mit der ersten Verbindungsleitung (BB₁) des ersten Schaltgeräts (SWG₁) verbundene erste Seite und eine mit der zweiten Verbindungsleitung (BB₂) des zweiten Schaltgeräts (SWG₂) verbundene zweite Seite und einen ersten zwischen eine der Seiten und Masse geschalteten Erdungsschalter (ES₁) aufweist, wobei das Verfahren in einer Steuereinheit (14) durchgeführt wird und umfasst:
bei Detektion eines Fehlers auf der Ausgangsversorgungsleitung (F₃) und nachfolgender Aktivierung der Strombegrenzungseinrichtung (12), wobei der Fehler das Laufen eines ersten Fehlerstroms über die erste Eingangsversorgungsleitung (F₁) und die erste Verbindungsleitung (BB₁) durch die Strombegrenzungseinrichtung (12) zu der fehlerhaften Ausgangsversorgungsleitung (F₃) und das Laufen eines zweiten Fehlerstroms über die zweite Eingangsversorgungsleitung (F₂) und die zweite Verbindungsleitung (BB₂) zu der fehlerhaften Ausgangsversorgungsleitung (F₃) bewirkt, so dass ein kombinierter Fehlerstrom durch den Leistungsschalter (CB₃) der fehlerhaften Ausgangsversorgungsleitung (F₃) läuft,
Überwachen (24) der Operation der Strombegrenzungseinrichtung (12),
Bestimmen, ob die Operation der Strombegrenzungseinrichtung (12) unbefriedigend ist, und
Schließen (28) des ersten Erdungsschalters (ES₁) in dem Fall (26), dass die Operation der Strombegrenzungseinrichtung als unbefriedigend angesehen wird, um dadurch den Strom durch den Leistungsschalter (CB₃) der fehlerhaften Ausgangsversorgungsleitung (F₃) zu einem Pegel zu senken, wo der Leistungsschalter (CB₃) geöffnet werden kann.

10. Verfahren nach Anspruch 9, wobei die erste Seite der Strombegrenzungseinrichtung (12) mit der ersten Eingangsversorgungsleitung (F₁) über die erste Verbindungsleitung (BB₁) des ersten Schaltgeräts (SWG₁) verbunden ist und die zweite Seite der Strombegrenzungseinrichtung (12) mit der zweiten Eingangsversorgungsleitung (F₂) über die zweite Verbindungsleitung (BB₂) des zweiten Schaltgeräts (SWG₂) verbunden ist.

11. Verfahren nach Anspruch 10, wobei ein erster Buskoppler-Leistungsschalter (BC₁) vorliegt in Reihe mit der zweiten Seite der Strombegrenzungseinrichtung (12) verbunden und ein zweiter Buskoppler-Leistungsschalter (BC₂) in Reihe mit der ersten Seite der Strombegrenzungseinrichtung (12) verbunden und weiter umfassend das Öffnen des ersten Buskoppler-Leistungsschalters (BC₁) und optional ebenfalls des zweiten Buskoppler-Leistungsschalters (BC₂) nach dem Öffnen des Leistungsschalters (CB₃) der fehlerhaften Ausgangsversorgungsleitung (F₃).

12. Verfahren nach einem der Ansprüche 9-11, weiter umfassend das Detektieren (20) des Fehlers der fehlerhaften Ausgangsversorgungsleitung (F₃), Aktivieren (22) der Strombegrenzungseinrichtung (12) auf Basis dieser Fehlerdetektion und Öffnen (30) des Leistungsschalters (CB₃) der fehlerhaften Ausgangsversorgungsleitung (F₃) nach dem Schließen des ersten Erdungsschalters (ES₁).

13. Verfahren nach einem der Ansprüche 9-12, wobei das Überwachen der Operation der Strombegrenzungseinrichtung (12) das Überwachen des Strompegels des Stroms durch die Strombegrenzungseinrichtung (12) umfasst und das Bestimmen, ob die Operation der Strombegrenzungseinrichtung (12) unbefriedigend ist, das Vergleichen des Strompegels mit einem Überstromschwellwert umfasst und das Bestimmen, dass die Operation unbefriedigend ist, vorgenommen wird, falls der Überstromschwellwert überschritten wird.

14. Verfahren nach einem der Ansprüche 9-13, wobei ein zweiter Erdungsschalter (ES₂) zwischen die Strombegrenzungseinrichtung (12) und Masse auf der gegenüberliegenden Seite der Strombegrenzungseinrichtung verglichen mit dem ersten Erdungsschalter (ES₁) geschaltet ist und weiter umfassend das Schließen ebenfalls des zweiten Erdungsschalters (ES₂), falls die Operation der Strombegrenzungseinrichtung als unbefriedigend angesehen wird.

15. Computerprogrammprodukt zum Handhaben einer fehlerhaften Strombegrenzungseinrichtung (12), die mit einem ersten und einem zweiten Schaltgerät (SWG₁, SWG₂) verbunden ist, wobei das erste Schaltgerät (SWG₁) eine erste Verbindungsleitung (BB₁) umfasst, die mit einer ersten Eingangsversorgungsleitung (F₁) verbunden ist, das zweite Schaltgerät (SW₂) einen Leistungsschalter (CB₃) und eine zweite Verbindungsleitung (BB₂) umfasst, wobei die zweite Verbindungsleitung (BB₂) mit einer zweiten Eingangsversorgungsleitung (F₂) und über den Leistungsschalter (CB₃) mit einer Ausgangsversorgungsleitung (F₃) verbunden ist, wobei die Verbindungsleitungen und Versorgungsleitungen jeweils ein Stromübertragungselement sind, wobei die Strombegrenzungseinrichtung eine mit der ersten Verbindungsleitung (BB₁) des ersten Schaltgeräts (SWG₁) verbundene erste Seite und eine mit der zweiten Verbindungsleitung (BB₂) des zweiten Schaltgeräts (SWG₂) verbundene zweite Seite aufweist und ein erster Erdungsschalter (ES₁) zwischen eine Seite der Strombegrenzungseinrichtung und Masse geschaltet ist, wobei das Computerprogrammprodukt einen Datenträger (32) umfasst mit einem Computerprogrammcode (34) ausgelegt zum Steuern einer Steuereinheit (14) zum,
bei Detektion eines Fehlers auf der Ausgangsversorgungsleitung (F₃) und nachfolgender Aktivierung der Strombegrenzungseinrichtung (12), wobei der Fehler das Laufen eines ersten Fehlerstroms über die erste Eingangsversorgungsleitung (F₁) und die erste Verbindungsleitung (BB₁) durch die Strombegrenzungseinrichtung (12) zu der fehlerhaften Ausgangsversorgungsleitung (F₃) und das Laufen eines zweiten Fehlerstroms über die zweite Eingangsversorgungsleitung (F₂) und die zweite Verbindungsleitung (B₂) zu der fehlerhaften Ausgangsversorgungsleitung (F₃) bewirkt, so dass ein kombinierter Fehlerstrom durch den Leistungsschalter (CB₃) der fehlerhaften Ausgangsversorgungsleitung (F₃) läuft,
Überwachen der Operation der Strombegrenzungseinrichtung (12),
Bestimmen, ob die Operation der Strombegrenzungseinrichtung (12) unbefriedigend ist, und
Schließen des ersten Erdungsschalters (ES₁) in dem Fall, dass die Operation der Strombegrenzungseinrichtung als unbefriedigend angesehen wird, um dadurch den Strom durch den Leistungsschalter (CB₃) der fehlerhaften Ausgangsversorgungsleitung zu einem Pegel zu senken, wo der Leistungsschalter (CB₃) geöffnet werden kann.

## Revendications

1. Agencement de dispositif de commutation comprenant :
au moins deux dispositifs d'alimentation d'entrée (F1, F2) et un dispositif d'alimentation de sortie (F3),
un premier dispositif de commutation et un second dispositif de commutation (SWG1, SWG2),
le premier dispositif de commutation (SW1) comprend une première liaison (BB1) reliée à un premier dispositif d'alimentation d'entrée (F1),
le second dispositif de commutation (SW2) comprend un disjoncteur (CB3) et une seconde liaison (BB2), où la seconde liaison (BB2) est connectée à un second dispositif d'alimentation d'entrée (F2) et, par l'intermédiaire du disjoncteur (CB3), au dispositif d'alimentation de sortie (F3),
lesdites liaisons et lesdits dispositifs de commutation étant chacun un élément de transmission de puissance, un dispositif de limitation de courant (12) ayant un premier côté connecté à la première liaison (BB1) du premier dispositif de commutation (SWG1) et un second côté connecté à la seconde liaison (BB2) du second dispositif de commutation (SWG2),
un premier commutateur de mise à la terre (ES1) connecté entre l'un des côtés du dispositif de limitation de courant et la terre, et
une unité de commande (14) fonctionnant pour :
lors de la détection d'un défaut sur le dispositif d'alimentation de sortie (F3) et l'activation consécutive du dispositif de limitation de courant (12), ledit défaut provoquant le passage d'un premier courant de défaut par l'intermédiaire du premier dispositif d'alimentation d'entrée (F1) et de la première liaison (BB1) à travers le dispositif de limitation de courant (12) vers le dispositif d'alimentation de sortie défectueux (F3) et le passage d'un second courant de défaut par l'intermédiaire du second dispositif d'alimentation d'entrée (F2) et de la seconde liaison (BB2) vers le dispositif d'alimentation de sortie défectueux (F3) de sorte qu'un courant de défaut combiné passe à travers le disjoncteur (CB3) du dispositif d'alimentation de sortie défectueux (F3), surveiller le fonctionnement du dispositif de limitation de courant (12),
déterminer si le fonctionnement du dispositif de limitation de courant (12) n'est pas satisfaisant, et fermer le premier commutateur de mise à la terre (ES1) dans le cas où le fonctionnement du dispositif de limitation de courant est jugé comme non satisfaisant, abaissant ainsi le courant à travers le disjoncteur (CB3) du dispositif d'alimentation de sortie (F3) à un niveau où ledit disjoncteur (CB3) peut être ouvert.

2. Agencement de dispositif de commutation selon la revendication 1, dans lequel le premier côté du dispositif de limitation de courant (12) est connecté au premier dispositif d'alimentation d'entrée (F1) par l'intermédiaire de la première liaison (BB1) du premier dispositif de commutation (SWG1) et le second côté du dispositif de limitation de courant est connecté au second dispositif d'alimentation d'entrée (F2) par l'intermédiaire de la seconde liaison (BB2) d'un second dispositif de commutation (SWG2).

3. Agencement de dispositif de commutation selon la revendication 1 ou la revendication 2, comprenant en outre un premier disjoncteur de coupleur de bus (BC1) connecté en série avec le second côté du dispositif de limitation de courant (12) et un second disjoncteur de coupleur de bus (BC2) connecté en série avec le premier côté du dispositif de limitation de courant (12), où l'unité de commande (14) est opérationnelle pour ouvrir le premier disjoncteur de coupleur de bus (BC1) et éventuellement aussi le second disjoncteur de coupleur de bus (BC2) après l'ouverture du disjoncteur (CB3) du dispositif d'alimentation de sortie défectueux (F3).

4. Agencement de dispositif de commutation selon l'une quelconque des revendications précédentes, dans lequel l'unité de commande (14) est en outre opérationnelle pour détecter le défaut du dispositif d'alimentation de sortie défectueux (F3), activer le dispositif de limitation de courant (12) sur la base de cette détection de défaut et ouvrir le disjoncteur (CB3) du dispositif d'alimentation l'alimentation de sortie défectueux (F3) après la fermeture du premier commutateur de mise à la terre (ES1).

5. Agencement de dispositif de commutation selon l'une quelconque des revendications précédentes, dans lequel l'unité de commande (14), lorsqu'elle surveille le fonctionnement du dispositif de limitation de courant (12), est opérationnelle pour surveiller le niveau de courant du courant à travers le dispositif de limitation de courant (12) et, lors de la détermination que le fonctionnement du dispositif de limitation de courant (12) n'est pas satisfaisant, est opérationnelle pour comparer le niveau de courant avec un seuil de surintensité et déterminer que le fonctionnement n'est pas satisfaisant si le seuil de surintensité est dépassé.

6. Agencement de dispositif de commutation selon l'une quelconque des revendications précédentes, comprenant en outre un second commutateur de mise à la terre (ES2) sur le côté opposé du dispositif de limitation de courant par rapport au premier commutateur de mise à la terre où l'unité de commande (14) est opérationnelle pour également fermer le second commutateur de mise à la terre (ES2) si elle détermine que le fonctionnement du dispositif de limitation de courant n'est pas satisfaisant.

7. Installation électrique comprenant l'agencement de dispositif de commutation selon l'une quelconque des revendications précédentes.

8. Installation électrique selon la revendication 7, dans laquelle la liaison est une barre omnibus dans lesdits dispositifs de commutation.

9. Procédé de gestion d'un dispositif de limitation de courant défectueux (12) connecté à un premier dispositif de commutation et à un second dispositif de commutation (SWG1, SWG2), où le premier dispositif de commutation (SW1) comprend une première liaison (BB1) connectée à un premier dispositif d'alimentation d'entrée (F1), le second dispositif de commutation (SW2) comprend un disjoncteur (CB3) et une seconde liaison (BB2), où la seconde liaison (BB2) est connectée à un second dispositif d'alimentation d'entrée (F2) et, par l'intermédiaire du disjoncteur (CB3), à un dispositif d'alimentation de sortie (F3), lesdites liaisons et lesdits dispositifs d'alimentation étant chacun un élément de transmission de puissance, le dispositif de limitation de courant ayant un premier côté connecté à la première liaison (BB1) du premier dispositif de commutation (SWG1), et un second côté connecté à la seconde liaison (BB2) du second dispositif de commutation (SWG2) et un premier commutateur de mise à la terre (ES1) connecté entre l'un des côtés et la terre, le procédé étant exécuté dans une unité de commande (14) et comprenant :
lors de la détection d'un défaut sur le dispositif d'alimentation de sortie (F3) et l'activation consécutive du dispositif de limitation de courant (12), ledit défaut provoquant le passage d'un premier courant de défaut par l'intermédiaire du premier dispositif d'alimentation d'entrée (F1) et de la première liaison (BB1) à travers le dispositif de limitation de courant (12) vers le dispositif d'alimentation de sortie défectueux (F3) et le passage d'un second courant de défaut par l'intermédiaire du second dispositif d'alimentation d'entrée (F2) et de la seconde liaison (BB2) vers le dispositif d'alimentation de sortie défectueux (F3) de sorte qu'un courant de défaut combiné passe à travers le disjoncteur (CB3) du dispositif d'alimentation de sortie défectueux (F3), surveiller (24) le fonctionnement du dispositif de limitation de courant (12),
déterminer si le fonctionnement du dispositif de limitation de courant (12) n'est pas satisfaisant, et fermer (28) le premier commutateur de mise à la terre (ES1) dans le cas (26) où le fonctionnement du dispositif de limitation de courant est jugé comme non satisfaisant, abaissant ainsi le courant à travers le disjoncteur (CB3) du dispositif d'alimentation de sortie défectueux (F3) à un niveau où ledit disjoncteur (CB3) peut être ouvert.

10. Procédé selon la revendication 9, dans lequel le premier côté du dispositif de limitation de courant (12) est connecté au premier dispositif d'alimentation d'entrée (F1) par l'intermédiaire d la première liaison (BB1) du premier dispositif de commutation (SWG1) et le second côté du dispositif de limitation de courant (12) est connecté au second dispositif d'alimentation d'entrée (F2), par l'intermédiaire de la seconde liaison (BB2) du second dispositif de commutation (SWG2).

11. Procédé selon la revendication 10, dans lequel il y a un premier disjoncteur de coupleur de bus (BC1) connecté en série avec le second côté du dispositif de limitation de courant (12) et un second disjoncteur de coupleur de bus (BC2) connecté en série avec le premier côté du dispositif de limitation de courant (12) et comprenant en outre l'ouverture du premier disjoncteur de coupleur de bus (BC1) et éventuellement également du second disjoncteur de coupleur de bus (BC2) après l'ouverture du disjoncteur (CB3) du dispositif d'alimentation de sortie défectueux (F3).

12. Procédé selon l'une quelconque des revendications 9 à 11, comprenant en outre la détection (20) du défaut du dispositif d'alimentation de sortie défectueux (F3), l'activation (22) du dispositif de limitation de courant (12) sur la base de cette détection de défaut et l'ouverture (30) du disjoncteur (CB3) du dispositif d'alimentation de sortie défectueux (F3) après la fermeture du premier commutateur de mise à la terre (ES1).

13. Procédé selon l'une quelconque des revendications 9 à 12, dans lequel la surveillance du fonctionnement du dispositif de limitation de courant (12) comprend la surveillance du niveau de courant du courant à travers le dispositif de limitation de courant (12) et la détermination du fait que si le fonctionnement du dispositif de limitation de courant (12) n'est pas satisfaisant comprend la comparaison du niveau de courant avec un seuil de surintensité, et la détermination du fait que le fonctionnement n'est pas satisfaisant est effectuée si le seuil de surintensité est dépassé.

14. Procédé selon l'une quelconque des revendications 9 à 13, dans lequel un second commutateur de mise à la terre (ES2) est connecté entre le dispositif de limitation de courant (12) et la terre sur le côté opposé du dispositif de limitation de courant par rapport au premier commutateur de mise à la terre le procédé comprenant en outre de fermer également le second commutateur de mise à la terre (ES2) si le fonctionnement du dispositif de limitation de courant est jugé comme non satisfaisant.

15. Produit programme informatique pour gérer un dispositif de limitation de courant défectueux (12) connecté à un premier dispositif de commutation et à un second dispositif de commutation (SWG1, SWG2), où le premier dispositif de commutation (SW1) comprend une première liaison (BB1) connectée à un premier dispositif d'alimentation d'entrée (F1), le second dispositif de commutation (SW2) comprend un disjoncteur (CB3) et une seconde liaison (BB2), où la seconde liaison (BB2) est connectée à un second dispositif d'alimentation d'entrée (F2) et, par l'intermédiaire du disjoncteur (CB3), à un dispositif d'alimentation de sortie (F3), lesdites liaisons et dispositifs d'alimentation étant chacun un élément de transmission de puissance, le dispositif de limitation de courant ayant un premier côté connecté à la première liaison (BB1) du premier dispositif de commutation (SWG1) et un second côté connecté à la seconde liaison (BB2) du second dispositif de commutation (SWG2), et un premier commutateur de mise à la terre (ES1) est connecté entre un côté du dispositif de limitation de courant et la terre, le produit programme informatique comprenant un support de données (32) avec un code de programme informatique (34) configuré pour amener une unité de commande (14) :
lors de la détection d'un défaut sur le dispositif d'alimentation de sortie (F3) et l'activation consécutive du dispositif de limitation de courant (12), ledit défaut provoquant le passage d'un premier courant de défaut par l'intermédiaire du premier dispositif d'alimentation d'entrée (F1) et de la première liaison (BB1) à travers le dispositif de limitation de courant (12) vers le dispositif d'alimentation de sortie défectueux (F3) et le passage d'un second courant de défaut par l'intermédiaire du second dispositif d'alimentation d'entrée (F2) et de la seconde liaison (BB2) vers le dispositif d'alimentation de sortie défectueux (F3) de sorte qu'un courant de défaut combiné passe à travers le disjoncteur (CB3) du dispositif d'alimentation de sortie défectueux (F3),
à surveiller le fonctionnement du dispositif de limitation de courant (12),
à déterminer si le fonctionnement du dispositif de limitation de courant (12) n'est pas satisfaisant, et à fermer le premier commutateur de mise à la terre (ES1) dans le cas où le fonctionnement du dispositif de limitation de courant est jugé comme non satisfaisant, abaissant ainsi le courant à travers le disjoncteur (CB3) du dispositif d'alimentation de sortie défectueux à un niveau où ledit disjoncteur (CB3) peut être ouvert.
